# EUROPEAN PATENT APPLICATION

(11) **EP 0 905 062 A1**
(43) Date of publication of application: **31.03.1999**
(21) Application number: 98113672.4
(22) Date of filing: 22.07.1998
(51) Int. Cl.: B65G 49/06, B65G 1/04

(54) **Storage unit for sheets of glass**

(30) Priority: 29.07.1997 IT PD970172
(71) Applicant: FOR.EL. BASE di VIANELLO FORTUNATO & C. S.n.c., 31056 Vallio di Roncade (Treviso) (IT)
(72) Inventor: Mistrello, Giorgio, Via Vittorio, 185 (IT)

(57) **Abstract**

The present invention has for object the structure of an automatized storage for plates of glass or similar.

Such a structure is characterized for the fact that it comprises at least a series of supports (13) running on first rails (17) to earth, for the plates of glass or similar, and at least a selecting group (16) comprising, mobile on seconds rails (18) to earth perpendicular to the said first rails (17), a first truck (20) composed by at least two rails (21), laying perpendicularly to the seconds rails (18) and with a step equal to that of the first rails to whose height is set and in comparison to which it can be positioned to constitute its prosecution, within said at least two rails (21) being mobile a second trolley (23) endowed with means of hookup for the extraction or insertion of said supports (13).

## Description

The present invention has for object the structure of an automatized storage particularly but not exclusively useful for plates of glass or similar. Automatic stocking facilities have been used for some time with the aim to of servicing areas of workmanship for plates of glass or similar.

Particularly such facilities allow the automatized extraction and selection of the plates of glass required by the relevant glass working section, as well as in the storing process, always automatized, of the plates of glass received in load.

Currently, the available storages on the market have a "merry-go-round" structure composed by mobile supports connected among them and moved in block to arrive in succession to the zone of collecting before processing.

Even though such storages are also reaching their purpose they are not flawless because of the following aspects: the need of always displacing all the supports with the relevant plates with considerable waste of energy (the glass, as it is weel known, has got an elevated specific weight), the possibility of long waiting time with consequent damage to the continuity of feeding of the area of workmanship and, eventually, need to foresee large floor spaces that sometimes in small companies are not available.

Main scope of this invention is to get an automatized storage whose structure allows to limit the movement only to the requested pieces.

In relation with this main purpose, another aim of the present invention is to get an automatized storage whose structure allows to eliminate, or reduce to the minimum, the waiting time.

Other purpose the present invention is to get an automatized storage whose structure allows a demolition of the energetic consumptions with the limitation of the movements of the supports.

Another purpose of the present invention is to get an automatized storage whose structure allows an optimization of the encumbered floor space and an elevated flexibility of solutions.

Further purpose of the present invention is to get an automatized storage whose structure also allows a proper operation in total absence of operators.

Not last purpose of the present invention is to get an automatized storage whose structure is absolutely safe for the operators as well as easy to manufacture with known technologies.

The main purpose, as well as all the a.m. aims and other purposes which will appear subsequently more clearly are attained by a structure of an automatized storage for plates of glass or similar, characterized by the fact to comprise at least a series of supports running on first rails to earth, among them parallel, and each suitable for one or more plates of glass or similar, and at least a selecting group comprising two or more second rails to earth, among them parallel, placed side by side to the said at least a series of supports and with longitudinal development perpendicular to the said first rails, on said seconds rails being mobile a first truck constituted by at least two rails, prepared perpendicularly to the said second rails, of length substantially equal to that of said supports and with step equal to that of the first rails to whose height is set and in comparison to which it can be positioned to constitute the prosecution practically of it without solution of continuity, on said rails being mobile a second trolley endowed with means of hookup to the said supports, able to carry out the extraction and/or the insertion of the same said supports when said rails are positioned to the corresponding couple of said first rails, being active first means of displacement for said first truck and second means of displacement for said second trolley.

Ulterior characteristics and advantages of the present invention will result mostly from the description of one version of his illustrated solutions as an example, but not for this reason limitative of his equivalent solutions, in the attached tables of sketches in which:
The figures 1 to 3 illustrate in plant a storage with a structure according to the present invention in different operational phases.
The figures 4 to 8 illustrate in projection different particulars of the storage of fig. 1.

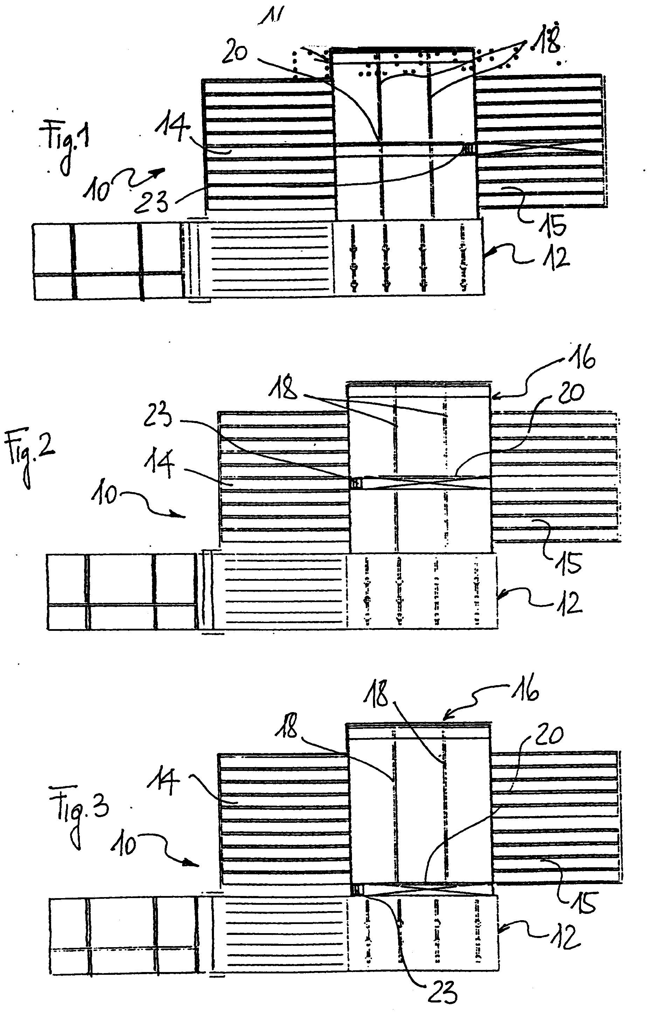

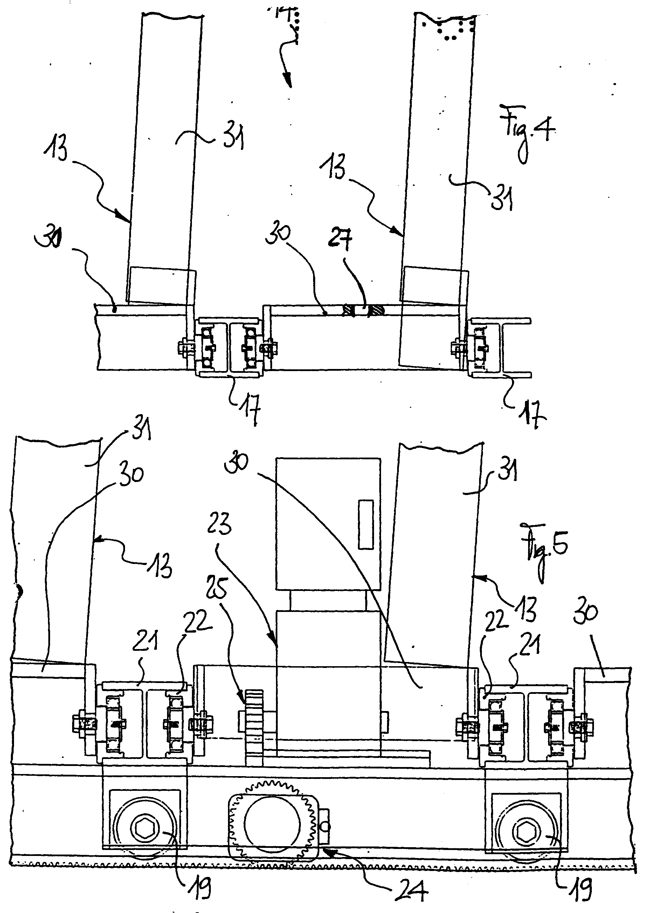

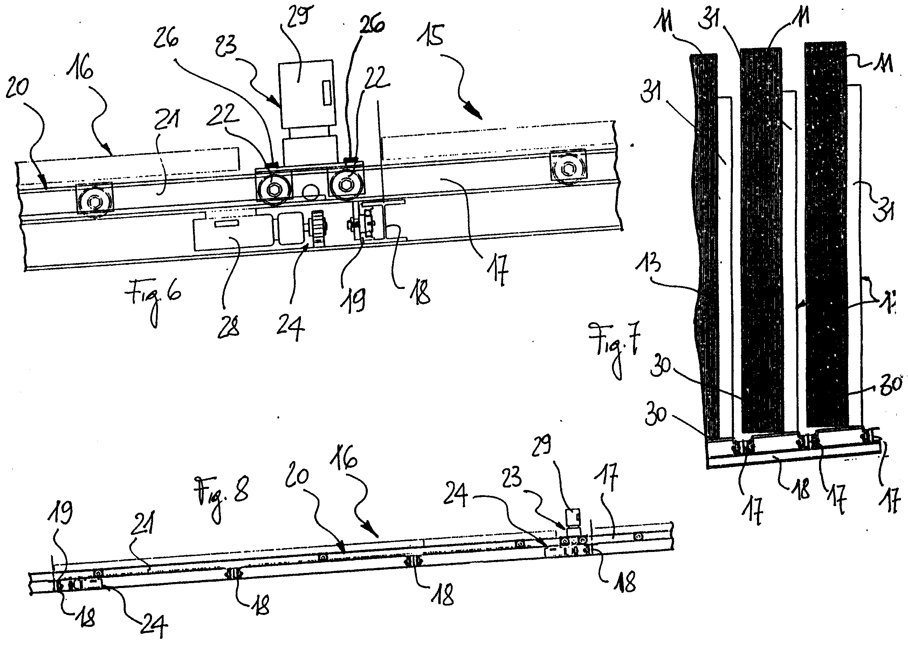

With particular reference to the figures from 1 to 3, a storage with a structure according to the present invention is listed with no. 10.

The storage 10, in this case for plates of glass numbered with 11, feeds a cutting area having means of collecting with sucker and numbered with 12 (in other cases it can serve other types of zones of workmanship).

The storage 10 includes in this solution two series of mobile supports 13, parallel and listed with 14 and 15, among which a group selecting group numbered with 16 is interposed.

Particularly, each of the series 14 or 15 includes a plurality of first rails to earth 17 among them parallel, on which the supports 13 are mobile and each of which can sustain one or more plates of glass 11.

The selecting group 16 includes, in this case, four second rails 18 to earth, among them parallel, placed with longitudinal development perpendicular to the first rails 17.

On the seconds rails 18 are mobile, through wheels 19, a first truck 20 composed by at least two rails 21, placed perpendicularly to the second rails 18, of length substantially equal to that of the supports 13, and with equal step to that of the first rails 17 to whose height is set and in comparison to which it can be positioned to constitute pratically the prosecution of it without solution of continuity.

On such rails 21 is mobile, on wheels 22, a second trolley 23 endowed with means of hookup to the supports 13, better described afterwards, able to carry out the extraction and/or the insertion of the same said supports when the rails 21 are positioned in correspondence to the relative couple of first rails 17.

The selecting group 16 includes respectively also first means of displacement 24 and second means of displacement 25 for said first truck 20 and second trolley 23, both better described afterwards.

In this solution the means of hookup are realized with two mobile pivots 26 able to insert into the relevant holes 27 (only one is visible in the figures) located in said supports 13 hooking them in alternative.

Both the first and the second means of displacement, 24 and 25, are in this case of the rack type and motorized with respective motor, 28 and 29 of an electric type or equivalent.

Always in this solution, the first rails 17, the second rails 18 and the rails 21 are double T shape profils, particularly the two second lateral rails 18 help to support the said first rails 17.

We can see as the particular configuration of the mentioned profils prevents any possibility of turnover of the plates of glass 11 either during their displacement or during their staying.

Particularly in this case, each of the supports 13 includes a dollied base 30 sliding between two adjacent first rails 17 ,from which it is developed upward a section of support 31 of the plates 11 sloped in comparison to her vertical one to allow the steady support of the same plates.

The store 10 can be suitably supplied with means of control and command of the displacement of said first and second truck and trolley 20 and 23, not illustrated in the figures, type programmable and in oneself known.

In practice it is ascertained that the present invention has attained the wanted purposes.

Particularly, it is to be observed as an automatized storage with a structure, according to this invention, allows to limit the movement only to the required pieces with a consequent reduction of the waiting time as well as the demolition of the energetic consumptions in relation to the limitation of the moved supports.

Still it is to be observed as an automatized storage with a structure according to this invention, allows an optimization of the encumbered floor space and an elevated flexibility of use.

Further observation to be made is as an automatized storage with a structure according to this invention can be made completely automatized and absolutely safe for the operators.

It is also to be observed as the storage with a structure according to this invention foresees clamping only to earth leaving free the superior part of the plates, this way facilitating considerably the loading operations (the glass, as it is known, is displaced preferably in vertical).

The present invention is susceptible of numerous changes or manufacturing solutions, all within the inventive concept, as for instance: the selecting group can include two or more first trucks, with relative second trolleys, among them independent.

The constructive details can be replaced technically with others equivalent.

The materials and the dimensions can be any according to the demands.

## Claims

1. Structure of automatized storage for plates of glass or similar characterized by the fact that it comprises at least a series of mobile supports on first rails to earth between them parallel, each suitable for one or more plates of glass or similar, and at least a selecting group comprising two or more second rails to earth, among them parallel, placed side by side to said at least a series of supports and with longitudinal development perpendicular to the said first rails, on said seconds rails being mobile a first truck composed by at least two rails, placed perpendicularly to the said second rails, of length substantially equal to that of said supports and with equal step to that of the first rails to whose height is set and in comparison to which it can be positioned to pratically constitute the prosecution of it without solution of continuity, on said rails being mobile a second trolley endowed with means of hookup to said supports, able to carry out the extraction and/or the insertion of the same said supports when said rails are positioned in correspondence to the relative couple of said first rails, being present first means of displacement for said first truck and second means of displacement for said second trolley.

2. Structure according to claim 1 characterized in that it comprises two series of supports among which said selecting group is interposed.

3. Structure according to claim 1 characterized in that said means of hookup include a mobile pivot able to be inserted in a correspondent hole present in each of said supports.

4. Structure according to claim 1 characterized in that said first means of displacement are of the rack type.

5. Structure according to claim 1 characterized in that said second means of displacement are of the rack type.

6. Structure according to claim 1 characterized in that said first rails are constituted from double T profiles.

7. Structure according to claim 1 characterized in that said seconds rails are constituted from double T profiles.

8. Structure according to claim 1 characterized in that said at least two rails are constituted from double T profiles.

9. Structure according to one or more of the former claims characterized in that it comprises four said seconds rails of which those lateral contribute to support said first rails.

10. Structure according to one or more of the former claims characterized in that each of said supports comprises a dollied base, sliding between two first adjacent rails, from which a section of support of the plates is upward developed tilted in comparison to her vertical one, to allow the steady support of the same plates.

11. Structure according to one or more of the former claims characterized in that it comprises means of control and command of the displacement of said first truck and second trolley.

12. Structure according to one or more of the former claims characterized in that said means of control and command of the displacement of said first truck and second trolley are programmable.

13. Structure according to one or more of the former claims characterized in that said first truck is mobile on wheels.

14. Structure according to one or more of the former claims characterized in that said second trolley is mobile on wheels.

15. Structure according to one or more of the former claims characterized in that said at least selecting group comprises two or more first trucks, with relative second trolleys, among them independent

16. Structure of automatized storage for plates of glass or similar according to one or more of the preceding claims characterized according to what described and illustrated in the attached tables of sketches and figures.
